# EUROPÄISCHE PATENTSCHRIFT

(11) **EP 1 382 551 B1**
(45) Veröffentlichungstag und Bekanntmachung des Hinweises auf die Patenterteilung: **19.11.2008**
(21) Anmeldenummer: 03016091.5
(22) Anmeldetag: 15.07.2003
(51) Int. Cl.: B65D 19/00, B65G 1/02

(54) **Layer-Tray**
Layer-Tray
Plateau

(30) Priorität: 15.07.2002 DE 20211591 U
(43) Veröffentlichungstag der Anmeldung: 21.01.2004
(73) Patentinhaber: WITRON Logistik + Informatik GmbH, 92711 Parkstein (DE)
(72) Erfinder: Winkler, Walter, 92711 Parkstein (DE)
(74) Vertreter: Betten & Resch

(56) Entgegenhaltungen:
- EP-A- 0 336 696
- DE-A1- 19 962 259
- US-A- 1 541 173
- US-A- 1 702 987

## Beschreibung

Die vorliegende Erfindung betrifft ein Tablar (sogenanntes Layer-Tray) zur Verwendung in einem Kommissioniersystem.

In einem Kommissioniersystem gemäß dem Stand der Technik, wie es z. B. in der europäischen Patentanmeldung EP-A-1 36 395 beschrieben ist, werden zu kommissionierende Artikel auf Entnahmepaletten oder in speziellen Behältern, beispielsweise Kleinladungsträgern - nachfolgend als KLT bezeichnet - in Lagerregalen gelagert. Von dort aus entnehmen die Kommissionierer - nachfolgend auch Picker genannt - die zu kommissionierenden Artikel, um ihren Kommissionsauftrag zu erledigen.

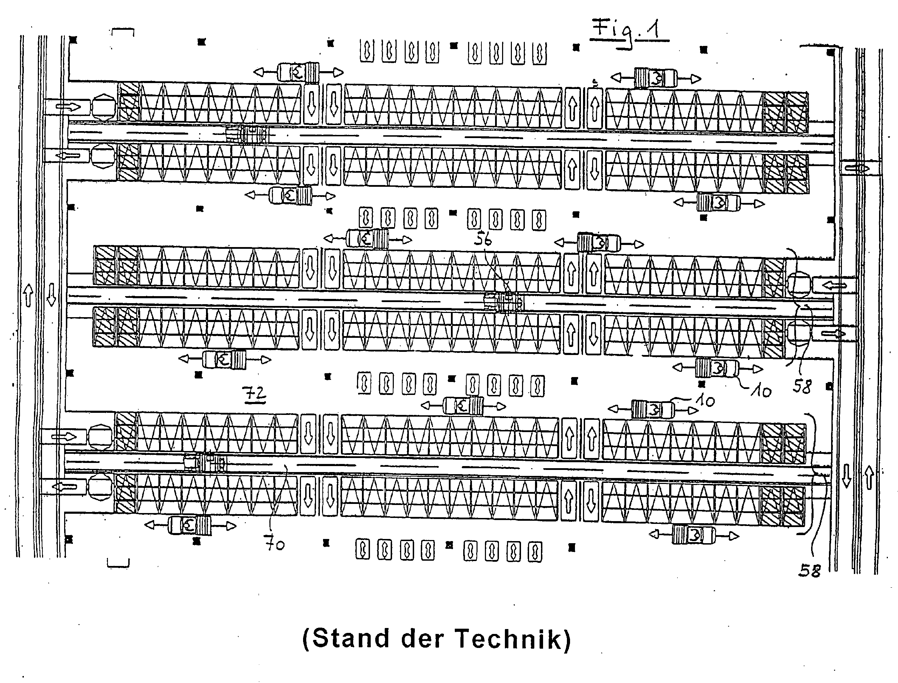

Das eingangs erwähnte Kommissioniersystem ist in Fig. 1 gezeigt und besteht beispielsweise aus einer Mehrzahl paralleler Regalreihen 58 zum Lagern und Puffern von Einheiten, etwa wie Paletten, KLTs oder Containern, zur Aufnahme der zu kommissionierenden Artikel. Zwischen den Regelreihen können abwechselnd Einlager-Gassen 70 und Pick-Gassen 72 gebildet sein. Über die Einlager-Gassen 70 werden die Regalreihen 58 mit zu lagernden und puffernden Einheiten versorgt. Von den Pick-Gassen 72 aus werden die zu kommissionierenden Artikel entnommen. In jeder Einlager-Gasse 70 befindet sich mindestens ein Einlager-Fahrzeug 56, das entlang der Gasse verfahrbar ist. Die Pick-Gasse 72 weist mindestens ein Picker-Fahrzeug 10 zum Picken der zu kommissionierenden Artikel auf, wobei das Picker-Fahrzeug 10 entlang der Gasse verfahrbar ist. Die Fahrzeuge werden auch allgemein als Regalfahrzeuge (auch RFZ) bezeichnet.

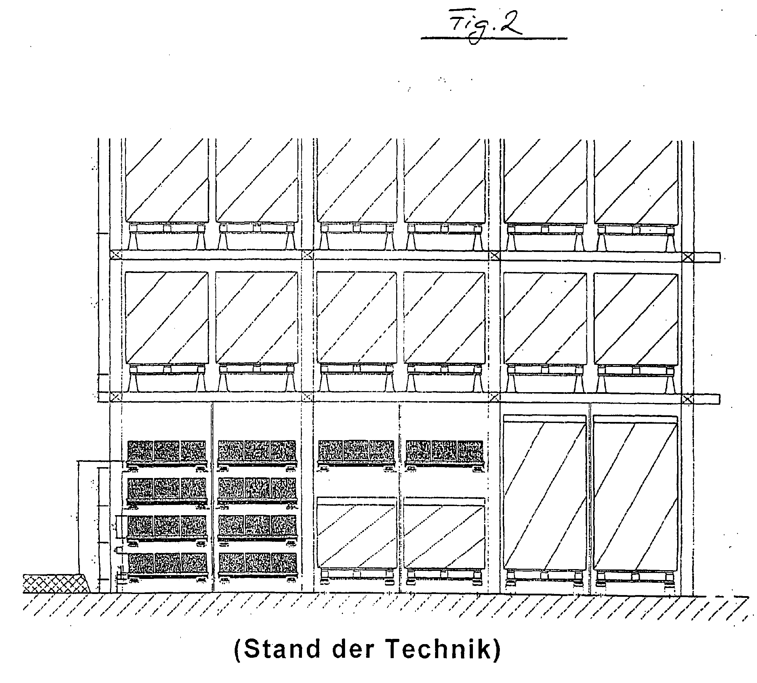

Fig. 2 zeigt schematisch eine Frontansicht auf einen Teil einer Regalfront der Fig. 1. Es sind drei Ebenen in x-Richtung und drei Spalten in y-Richtung dargestellt. In den oberen beiden Ebenen sind jeweils zu kommissionierende Artikel veranschaulicht, die auf Paletteneinheiten gelagert sind. In der untersten Ebene der Regalfront sind in der am weitesten links gelegenen Regalspalte sogenannte Layer-Trays gelagert. Unter einem Layer-Tray versteht man eine Art Tablett bzw. Tablar, auf dem Waren, die in Kollies verpackt sind, gelagert sind. Unter einem Kollie versteht man eine Greifeinheit (bzw. den Artikel), der kommissioniert bzw. gepickt werden soll, wie z. B. ein Fünferpack Wegwerffeuerzeuge. Eine Greifeinheit kann aus mehreren zu einer Einheit verpackten Artikeln bestehen. In bzw. auf den einzelnen Trays befindet sich jeweils nur eine Palettenlage (Layer) von Einheiten, die sich aus mehreren Kollie-Reihen zusammensetzen kann.

In den Kommissioniersystemen gemäß dem Stand der Technik ist es durchaus üblich, daß Artikel, die auf schichtweise gepackten Paletten in das System eingeliefert werden, depalettiert werden, d.h. die Artikel werden schichtweise von der Palette - entweder automatisch oder manuell - auf Trays umgepackt. Die auf Trays umgepackten Artikel werden anschließend beispielsweise durch Einlager-Fahrzeuge in die Lagerregale eingelagert.

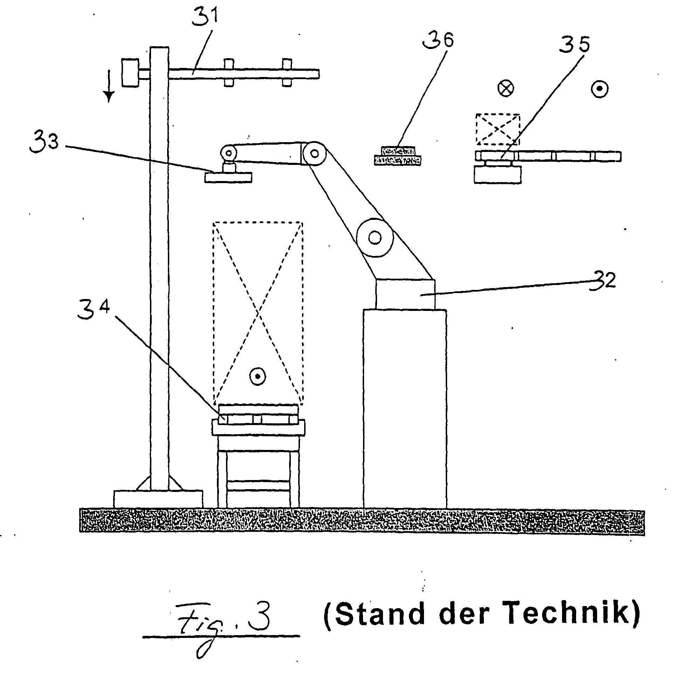

Fig. 3 zeigt eine (automatisierte) Depalettierstation, wie sie beispielsweise in dem angemeldeten deutschen Gebrauchsmuster Nr. 202 03 287 offenbart ist. Die automatisierte Depalettierstation gemäß der Fig. 3 besteht aus einem Kamerasystem 31, einer Roboterzelle 32 mit einem Greifer 33 und einer Palettenfördertechnik 34 und (Behälter-)Fördertechnik 35. Das Kamerasystem 31 umfaßt eine Zeilenkamera, die zum Abscannen der Palettenlage erforderlich ist. Das Kamerasystem 31 nimmt ein Bild der obersten Schicht der lagenförmig mit Artikeln bepackten Palette auf, um das aufgenommene Bild mittels eines Computers auszuwerten, wobei die Lage der Artikel in der obersten Schicht auf der Palette festgestellt wird. Diese Information wird an eine (nicht dargestellte) Steuerung weitergegeben, die aufgrund dieser Daten der Roboterzelle 32, insbesondere dem Greifer 33 des Roboters 32, Anweisungen gibt, wo sich die einzelnen Artikel auf der Palette befinden und wie diese vom Greifer 33 aufgenommen werden müssen, um direkt in bzw. auf einen leeren Layer-Tray umgepackt zu werden, der am Umpackort auf der Fördertechnik 35 vorgesehen ist.

Die Palettenfördertechnik 34 ist dabei für den Zu- und Abtransport der Paletten erforderlich. Auf der Fördertechnik 35 werden leere Behälter, kleinere Paletten oder Layer-Trays (je nach Systemanforderung) zugeliefert und nach dem Umpackvorgang vollbepackt mit Einheiten wieder abtransportiert. Gegebenenfalls werden die Artikel auf einer Zwischenablage 36 geordnet, um auf die auf der Fördertechnik 35 wartende Einheit zu puffern.

In dem am weitesten links gelegenen unteren Regallagerplatz in Fig. 2 sind jeweils zwei Layer-Trays nebeneinander in vier Reihen übereinander gelagert. In der mittleren Regalspalte der Fig. 2 sind in der tiefsten Ebene zwei Layer-Trays nebeneinander über zwei nebeneinander angeordneten Paletteneinheiten eingelagert. In der rechten Spalte des Regals befinden sich auf der unteren Ebene zwei Paletteneinheiten, auf denen beispielsweise Container gelagert sind.

In Fig. 4 ist ein Schnitt entlang einer y-z-Ebene eines Kommissioniersystems gezeigt, das dem der Fig. 1 entspricht. In der Mitte der Fig. ist eine Pick-Gasse gezeigt, die von zwei Lagerregalreihen umschlossen wird, die sich in der (nicht dargestellten) x-Richtung erstrecken. In der rechts dargestellten Regalreihe sind insgesamt acht Layer-Trays zu sehen, die jeweils mit drei Kollie-Reihen à drei Kollies beladen sind.

Fig. 5 zeigt eine Ansicht der y-x-Ebene der in der Fig. 4 rechts dargestellten Regalreihe.

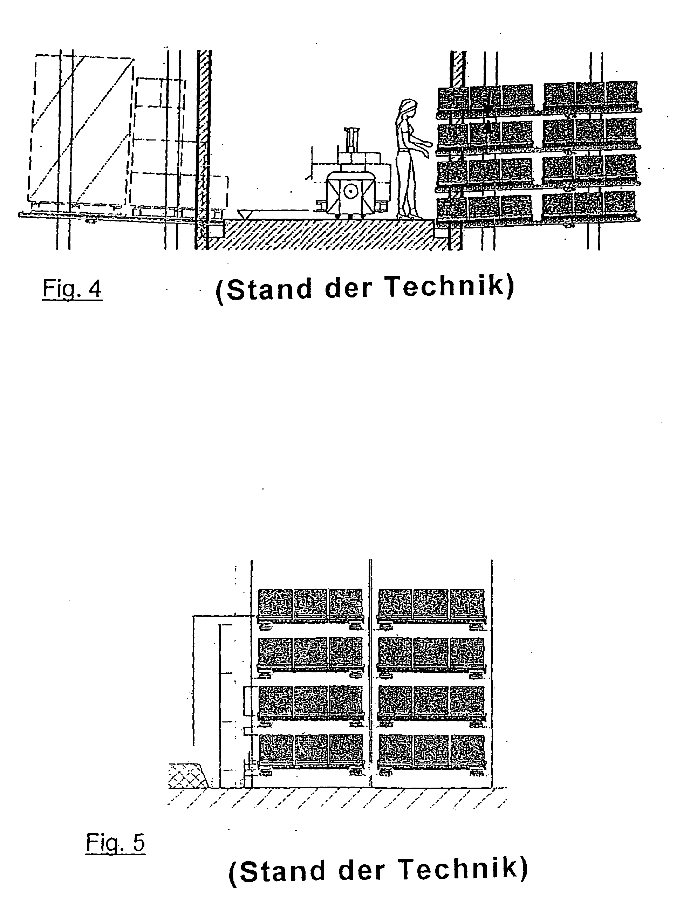

Ferner ist in der Fig. 4 in der Pick-Gasse eine Kommissioniererin mit ihrem Pick-Fahrzeug gezeigt, die die Kollies von den Layer-Trays entnimmt, um sie auf ihr Pick-Fahrzeug zu picken. Die Layer-Trays sind auf sogenannten Schwerkraftrollbahnen gelagert. Die Schwerkraftrollbahn ist in Richtung der Pick-Gasse abgesenkt. Ist eines der Layer-Trays leer geräumt, so kann es vom Picker aus dem Regal entnommen werden. Aufgrund der Schwerkraft rollt das nächste volle Layer-Tray in Richtung der Pick-Gasse nach.

Da möglichst viele Artikel in den Lagerregalen gelagert werden sollen, sind die Artikel bzw. die Einheiten, auf denen sie sich befinden, räumlich eng gepackt. Wie man aus Fig. 4 unschwer erkennt, ist es dem Picker aufgrund der räumlichen Enge lediglich möglich, Kollies aus der vordersten Kollie-Reihe zu picken. Ferner kann der Kommissionierer oftmals nicht weit genug in das Regal hineingreifen, um die nächste Kollie-Reihe zu picken. Sollte es dennoch möglich sein, die nächste Kollie-Reihe zu picken, so ist dies jedoch nur in einer ergonomisch ungünstigen Pick-Haltung möglich.

Die EP-A-0336696 beschreibt eine tablarförmige Vorrichtung zur Produktpräsentation. Ein Produkttablar ist gleitend an einer Befestigungsanordnung angebracht und eine mit Feder versehene Halteeinrichtung sorgt dafür, dass die zu präsentierenden Produkte immer im vorderen, zugänglichen Bereich der Präsentationseinrichtung befindlich sind.

Eine ähnliche Anordnung zur Produktpräsentation ist in den US-Patenten 1,541,173 und 1,702,987 beschrieben, bei denen eine manuelle Schiebeeinrichtung zum Vorschieben des jeweiligen Produktes bzw. von Karteikarten vorgesehen ist.

Es ist daher eine Aufgabe der vorliegenden Erfindung, ein Layer-Tray zu schaffen, das eine ergonomische Pick-Haltung des Kommissionierers für alle auf dem Tray befindliche Kollies erlaubt.

Diese Aufgabe wird von dem erfindungsgemäßen Layer-Tray gemäß Anspruch 1 gelöst, das ein Bodenteil, auf den Kommissionierartikel lagerbar sind, einen am Boden angebrachten Rahmen, und eine Schiebeeinrichtung zum Schieben der Kommissionierartikel in Richtung einer Entnahmeposition aufweist. Dabei ist das wannenförmige Bodenteil gegenüber dem Rahmen so abgesenkt, daß, wenn man zwei Tablare übereinander stapelt, das Bodenteil des oberen Tablars vom Rahmen des unteren Tablars umschlossen wird.

Gemäß einer bevorzugten Ausführungsform ist die Schiebeeinrichtung ein Schieber, der im Bodenteil mittels einer Nut geführt wird.

Gemäß einer weiteren Ausführungsform ist die Schiebeeinrichtung ein Schieber, der im Rahmen mittels einer Nut geführt wird.

Gemäß einer weiteren Ausführungsform weist der Rahmen und/oder das Bodenteil eine Aussparung auf, durch die ein mit der Schiebeeinrichtung verbundener Griff zum Bewegen des Schiebers greift.

Gemäß einer weiteren Ausführungsform ist das Bodenteil mit dem Rahmen einstückig ausgebildet.

Gemäß einer weiteren Ausführungsform ist die Höhe eines Schiebers der Schiebeeinrichtung kleiner oder gleich der Höhe des Bodenteils.

Gemäß einer weiteren Ausführungsform weist der Schieber ein Gelenk auf, so daß der Schieber auf dem Boden klappbar ist.

Gemäß einer weiteren Ausführungsform ist der Rahmen am Bodenteil anbringbar, insbesondere aufsteckbar, der mit einem Griff verbundene Schieber weist ein Gelenk auf, so daß der Schieber auf das Bodenteil klappbar ist, und der Schieber weist eine Feder auf, so daß der Schieber im ausgezogenen Zustand nicht aus der Führungsnut springt.

Gemäß einer weiteren Ausführungsform ist die Größe der Lagerfläche, auf der die Artikel lagerbar sind, gleich der Lagerfläche der im Kommissioniersystem verwendeten Paletten und/oder Kleinladungsträger.

Gemäß einer weiteren Ausführungsform weist das Bodenteil eine Erhebung oder Vertiefung auf, wodurch das Tablar mit einem Lastaufnahmemittel eines Regalfahrzeugs oder Staplerfahrzeugs transportierbar ist.

Gemäß einer weiteren Ausführungsform weist das Tablar eine Spannfeder, die die Schiebeeinrichtung in Richtung der Entnahmeposition gegenüber dem Tablar vorspannt, ein Halteelement zum Halten der vorgespannten Schiebeeinrichtung, sowie eine Auslöseeinrichtung zum Lösen des Halteelements auf. In einer weiteren Ausführungsform besteht der Rahmen aus mehreren Elementen, und jedes Element ist über mindestens ein Gelenk mit dem Bodenteil verbunden, so daß die Elemente des Rahmens auf das Bodenteil klappbar sind.

Ein Vorteil der Erfindung ist, daß das Picken erleichtert wird und aus einer ergonomisch günstigen Pickposition möglich ist, da ein Kommissionierer die zu kommissionierenden Waren über die Schiebeeinrichtung zu sich ziehen kann, so daß er nicht mehr in die volle Tiefe des Tablars greifen muß, um alle auf dem Tablar befindlichen Artikel entnehmen zu können. Außerdem kann durch die Erfindung die Pickleistung gesteigert werden.

Ein weiterer Vorteil des erfindungsgemäßen Tablars ist, daß es stapelbar ist.

Weitere Aufgaben, Vorteile und Merkmale der vorliegenden Erfindung werden aus der nun folgenden Beschreibung in Zusammenschau mit den beigefügten Zeichnungen klar werden, in denen:
- Fig. 1: ein Kommissioniersystem in Draufsicht gemäß dem Stand der Technik zeigt;
- Fig. 2: eine Frontansicht eines Lagerregals des Kommissioniersystems gemäß der Fig. 1 zeigt;
- Fig. 3: eine vollautomatische Depalletierstation gemäß dem Stand der Technik zeigt;
- Fig. 4: einen schematischen Querschnitt entlang y-z-Ebene des Kommissioniersystems gemäß der Fig. 1 zeigt;
- Fig. 5: einen schematischen Querschnitt entlang der y-z-Ebene des Kommissioniersystems gemäß der Fig. 1 zeigt;

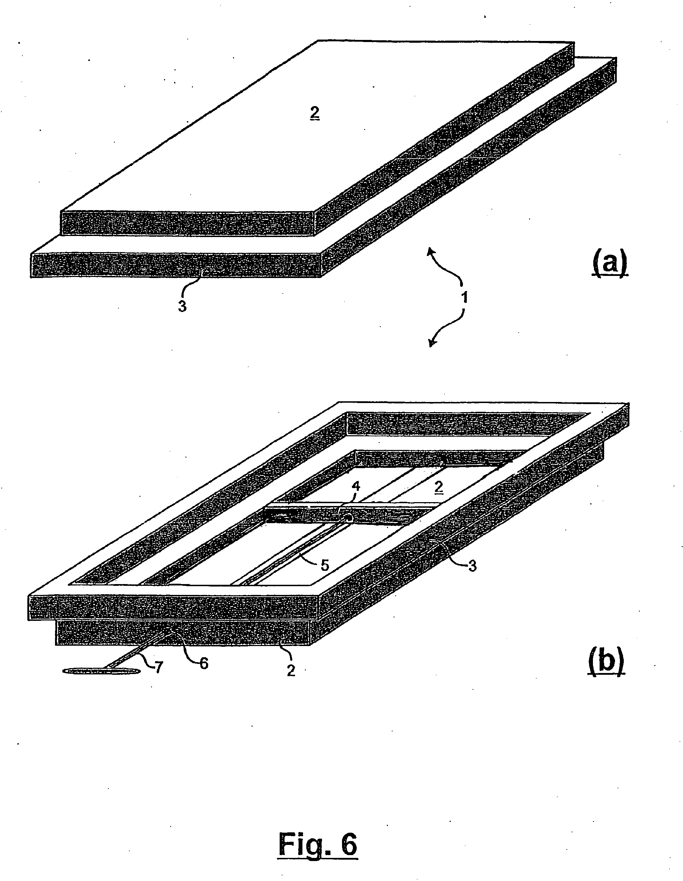

- Fig. 6a und 6b: eine perspektivische Ansicht auf und unter einen erfindungsgemäßen Layer-Tray zeigen,

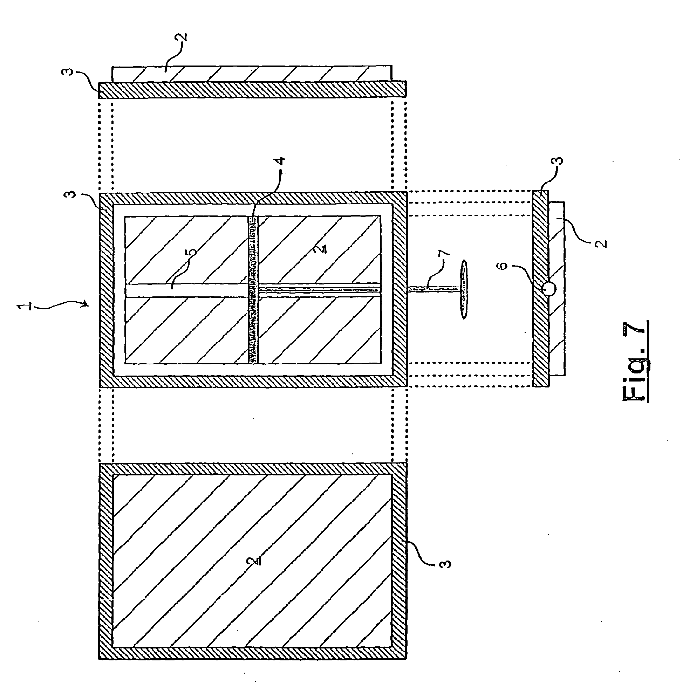

- Fig. 7: zweidimensionale Ansichten des Trays der Fig. 6 zeigt;

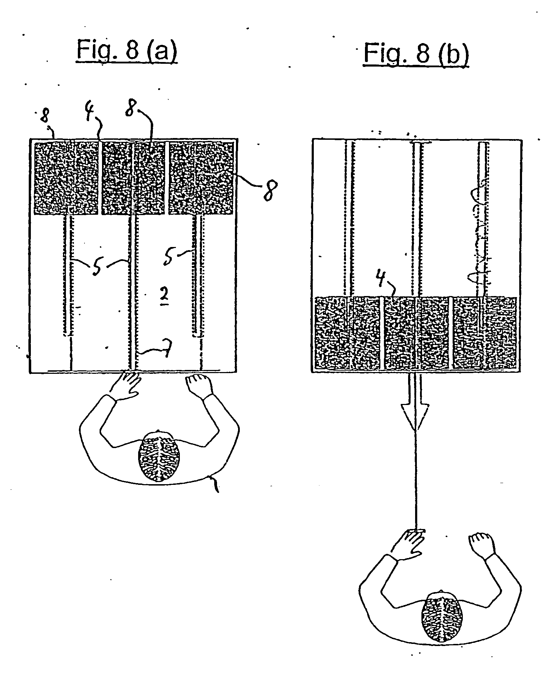

- Fig. 8: eine Entnahme von Kollies von einem Tray gemäß der Erfindung zeigt

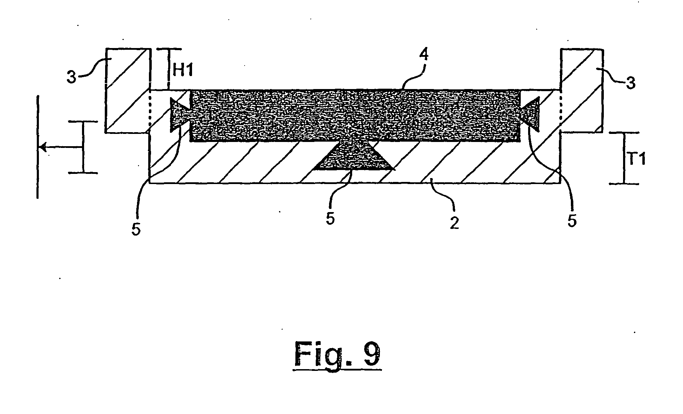

- Fig. 9: eine Schnittansicht entlang der Linie I-I der Fig. 7 zeigt; und

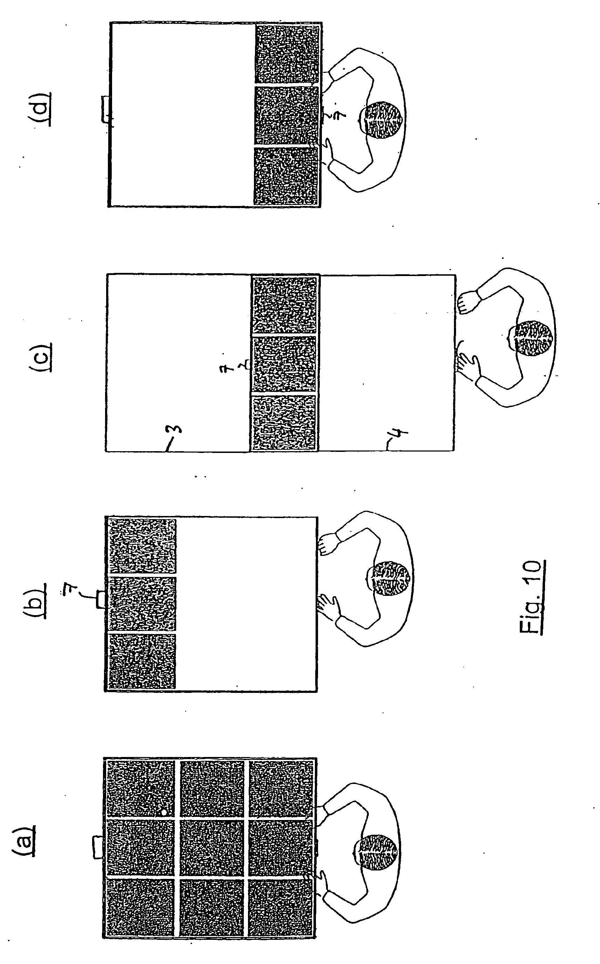

- Fig. 10: ein weiteres Ausführungsbeispiel der Erfindung zeigt.

In den Figuren 6 und 7 ist eine erste Ausführungsform gemäß der vorliegenden Erfindung gezeigt. Fig. 6 zeigt eine perspektivische Ansicht von oben und eine von unten auf das erfindungsgemäße Layer-Tray bzw. Tablar. Die Fig. 7 zeigt eine Ansicht von unten, eine Draufsicht und die entsprechenden Seitenansichten des Layer-Trays.

In der Fig. 6b ist eine perspektivische Ansicht des erfindungsgemäßen Layer-Trays 1 dargestellt. Das Layer-Tray 1 umfaßt einen Boden 2, auf dem ein Rahmen 3 aufsitzen kann. Der Boden 2 und der Rahmen 3 können auch einstückig ausgebildet sein. Im Boden 2 ist parallel zur Längsseite eine Nut 5 eingelassen, in der ein Schieber 4 geführt wird. Der Schieber 4 ist mit einem Griff 7 verbunden. Der Griff 7 kann durch eine Öffnung bzw. Aussparung 6 im Boden 2 und/oder Rahmen 3 des Layer-Trays 1 ragen.

In der Fig. 6a ist das Layer-Tray 1 in einer perspektivischen Ansicht von unten zu sehen. Man erkennt, daß das wannenförmige Bodenteil 2 vom Rahmen 3 umgeben ist. In einer bevorzugten Ausführungsform ist die Höhe des Rahmens 3 gleich der Dicke des Bodens 2. Ferner entspricht der äußere Umfang des Bodenteils 2 annähernd dem inneren Umfang des Rahmenteils 3, so daß mehrere Layer-Trays ineinander bzw. aufeinander stapelbar sind. Die Höhe des Schiebers 4 ist dabei so gewählt, daß dieser nicht über die Höhe des Bodens 2 hinausragt.

In Fig. 7 ist in der Mitte nochmals eine Draufsicht auf das erfindungsgemäße Layer-Tray 1 gezeigt. Rechts und darunter sind jeweils die entsprechenden Profile gezeigt. Links ist eine Draufsicht auf die Unterseite des Layer-Trays 1 gezeigt. In den Fig. 6 und 7 und allen nachfolgenden Figuren bezeichnen gleiche Bezugszeichen gleiche Elemente der Erfindung.

Die Fig. 8a und 8b zeigen eine Draufsicht auf das erfindungsgemäße Layer-Tray 1 bei Verwendung in einem Kommissioniersystem. In dem in der Fig. 8 dargestellten Ausführungsbeispiel sind im Boden drei Nuten 5 eingelassen, die zur Führung des Schiebers 4 dienen. In der Fig. 8a sind drei Kollies 8 dargestellt, die sich im hinteren Teil des Layer-Trays befinden. Ein Kommissionierer 9 hat die von ihm aus gesehen beiden vorderen Kollie-Reihen bereits gepickt. Die hinten im Layer-Tray gelagerten Kollies 8 kann der Kommissionierer 9 jedoch überhaupt nicht oder nur unter erheblichen Anstrengungen erreichen, insbesondere wenn mehrere Layer-Trays in einem Regal übereinander angeordnet sind, wie dies bereits in Fig. 4 veranschaulicht ist.

Um die restlichen sich auf dem Layer-Tray befindlichen Kollies 8 besser picken zu können und um eine ergonomisch günstige Pick-Haltung einnehmen zu können, betätigt der Kommissionierer 9 den Schieber 4, indem er diesen mittels des mit dem Schieber 4 verbundenen Griffs 7 zu sich zieht. Dieser Vorgang ist in Fig. 8b schematisch dargestellt und wird durch den nach unten zeigenden Pfeil verdeutlicht. Durch die Betätigung des Schiebers 4 werden die Kollies 8 nach vorn gezogen. Anschließend kann der Kommissionierer 9 den Schieber 4 wieder in seine ursprüngliche Position nach hinten zurückschieben und die Kollies 8 aus der für ihn günstigen Pick-Position picken. Gemäß einer bevorzugten Ausführungsform ist der Griff 7 so am Schieber 4 angebracht, daß er, wenn sich der Schieber 4 im ursprünglichen Zustand befindet, (fast) vollständig in der Nut 5 liegt. Die in der Fig. 6 dargestellte Öffnung 6 befindet sich dann im Bodenteil 2. So kann gewährleistet werden, daß mehrere (leere) Layer-Trays übereinander gestapelt werden können.

Fig. 9 zeigt einen Querschnitt entlang der Linie I-I der Fig. 7. Der Schnitt entlang der Linie I-I ist so gewählt, daß sich der Schieber 4 in dieser Schnittebene befindet. Der bei diesem Beispiel im wesentlichen rechtwinklig ausgebildete Schieber 4 weist an der Unterseite einen Vorsprung auf, so daß der Schieber 4 über den Vorsprung in der Nut gehalten und geführt wird.

Ferner erkennt man in der Fig. 9, daß der Querschnitt des erfindungsgemäßen Layer-Trays so gewählt ist, daß das Bodenteil 2 in den Rahmen 3 paßt, wenn man mehrere Layer-Trays übereinander stapelt. Dabei ist die Höhe des Schiebers 4 so gewählt, daß sie nicht über die Höhe des Bodenteils 2 hinausragt, womit die Stapelbarkeit der Layer-Trays gewährleistet ist. Es ist jedoch nicht zwingend erforderlich, daß die Höhe des Schiebers 4 gleich der Höhe des Bodenteils 2 ist. Die Höhe des Schiebers kann auch über die Höhe des Bodens 2 hinausragen. Sie kann auch höher als die Kombination der Höhen von Bodenteil und Rahmen sein. Jedoch sollte dann zwischen dem Schieber 4 und seinem Vorsprung ein Gelenk vorgesehen sein, so daß man den Schieber 4 im aufeinander gestapelten Zustand auf den Boden umklappen kann. Ferner muß die Dicke T₁ des Bodens 2 nicht gleich der Höhe H₁ des Rahmens 3 sein. Es sind beliebige Höhen für Bodenteil und Rahmen möglich. Der Rahmen 3 sollte jedoch im übereinander gestapelten Zustand den Boden des darüber gestapelten Layer-Trays umschließen. Diese Abmessungen sind so bemessen, daß mehrere Layer-Trays stabil übereinander stapelbar sind.

In Fig. 10 ist eine weitere Ausführungsform der Erfindung in Draufsicht dargestellt. Bei dem Layer-Tray der Fig. 10 ist die Schiebeeinrichtung 4 mit dem Rahmen 3 oder dem Boden 2 mittels einer Nut und einem entsprechenden Vorsprung (Feder) am Rahmen 3 verbunden. Dies ist schematisch in Fig. 9 durch die links und rechts vom Schieber 4 gelegenen Vorsprünge 5 veranschaulicht. Die "Nut" und der Vorsprung bzw. die "Feder" können ähnlich wie in Fig. 9 ausgebildet sein. Prinzipiell sind aber auch andere Querschnittsformen als die Trapezform möglich, so lange die Feder in der Nut gehalten wird und der Schieber 4 entlang der Nut 5 verschiebbar ist.

In Fig. 10a ist das Layer-Tray vollständig mit Kollies beladen. In Fig. 10b hat der Picker bereits die beiden vorn gelegenen Kollie-Reihen aus dem Layer-Tray entnommen. Ohne erhebliche Anstrengung kommt der Picker aber nicht an die letzten drei Kollies, um diese zu entnehmen. Deswegen zieht der Picker am Griff 7, der mit dem Schieber 4 verbunden ist, und zieht so den Schieber 4 zu sich, indem er beispielsweise einige Schritte nach hinten geht (Fig. 10c). In der Fig. 10d hat der Picker den Schieber 4 wieder in seine ursprüngliche Position zurückgeschoben. Die nach vorn beförderten Kollies können nun problemlos vom Picker entnommen werden. Dies geschieht in einer ergonomisch günstigen Haltung, was einen großen Vorteil der Erfindung darstellt.

Bei der in der Fig. 10 dargestellten Variante der Erfindung, bei der der Schieber im Rahmen geführt wird, kann am Schieber 4 auf der dem Picker gegenüberliegenden Seite ein weiterer Griff befestigt sein. Der Schieber 4 ist dann sowohl von vorn als auch von hinten betätigbar, so daß die Orientierung des Layer-Trays im Lagerregal, wie es beispielsweise in der Fig. 4 dargestellt ist, keine Rolle spielt. Der Schieber 4 läßt sich dann auch nach hinten herauszuziehen. In der Mittelstellung ist vorzugsweise eine Arretierung vorgesehen. Vorzugsweise weist der Schieber 4 entlang der Feder, die in der Nut 5 gehalten wird, Stopp-Vorrichtungen auf, die ein mögliches Herausziehen des Schiebers 4 aus dem Rahmen 3 verhindern. Die Schiebeeinrichtung 4 kann auch durch eine Kombination von Nuten im Rahmen und im Boden geführt werden.

Es ist außerdem möglich, die auf dem Tablar befindlichen Collies mittels einer Feder unter ständiger Vorspannung in Richtung auf die Entnahmeposition zu halten.

Gemäß einer weiteren Ausführungsform der Erfindung kann der Schieber 4 über eine Spannfeder mit dem Layer-Tray verbunden sein. Dabei wird auf den Griff 7 verzichtet. Die Spannfeder ist in Richtung der Entnahmestelle vorgespannt, wenn sich der Schieber im ursprünglichen Zustand befindet. Die Spannfeder ist des weiteren mit einer Auslöseeinrichtung verbunden, die vom Picker betätigt werden kann, um die Spannfeder zu entspannen. Bei Betätigung der Auslösevorrichtung entspannt sich die Spannfeder und drückt so den Schieber 4 in Richtung der Entnahmestelle. Die Stärke der Spannfeder muß dabei so gewählt sein, daß die von der Spannfeder ausgeübte Kraft ausreicht, um auf dem Layer-Tray gelagerte Artikel zu bewegen.

Im Beispiel der Fig. 8b würde dies bedeuten, daß die Spannfeder zwischen dem Schieber 4 und dem hinteren Rand des Rahmens 3 oder Bodens 2 angebracht ist. Vorzugsweise befindet sich die Spannfeder in der Nut 5.

Gemäß einer weiteren Ausführungsform der Erfindung ist der Rahmen 3 nicht, wie bisher beschrieben, mit dem Bodenteil 2 einstückig ausgebildet, der Rahmen 3 kann auch vielmehr so ausgebildet sein, daß er entweder auf das Bodenteil 2 aufsteckbar oder vom/zum Boden klappbar ist. Bei der klappbaren Variante sind zwischen dem Bodenteil 2 und dem aus möglicherweise mehreren Elementen bestehenden Rahmen 3 jeweils Gelenke vorgesehen, so daß der Rahmen 3 auf den Boden geklappt werden kann. Dadurch sind Layer-Trays mit erhöhten Rahmen ebenfalls platzsparend stapelbar. Des weiteren können auf der der Lagerfläche des Bodens gegenüberliegenden Seite des Bodens Erhebungen bzw. Vertiefungen vorgesehen sein, wodurch das Layer-Tray mit einem sogenannten Lastaufnahmemittel, wie beispielsweise einer Teleskopgabel, eines Regalfahrzeugs, wie beispielsweise eines Gabelstaplers, transportierbar ist, indem die Gabel in entsprechende Vertiefungen im Boden 2 eingefahren wird.

Es soll nochmals hervorgehoben werden, daß ein Vorteil der Erfindung ist, daß ein Picker immer in einer ergonomisch günstigen Haltung picken kann, unabhängig davon, wie "voll" oder "leer" das Tablar ist.

## Patentansprüche

1. Tablar (1) zur Verwendung in einem Kommissioniersystem, das aufweist:
ein Bodenteil (2), auf dem Kommissionierartikel lagerbar sind,
einen Rahmen (3), der am Bodenteil angebracht ist, und
eine Schiebeeinrichtung (4) zum Verschieben der Kommissionierartikel in Richtung einer Entnahmeposition der Kommissionierartikel,
**dadurch gekennzeichnet dass** das wannenförmige Bodenteil (2) gegenüber dem Rahmen so abgesenkt ist, daß, wenn man zwei Tablare übereinander stapelt, das Bodenteil des oberen Tablars vom Rahmen des unteren Tablars umschlossen wird.

2. Tablar nach Anspruch 1, wobei die Schiebeeinrichtung (4) einen Schieber aufweist, der im Bodenteil (2) mittels mindestens einer Nut (5) geführt wird.

3. Tablar nach Anspruch 1, wobei die Schiebeeinrichtung (4) einen Schieber aufweist, der im Rahmen (3) mittels mindestens einer Nut (5) geführt wird.

4. Tablar nach Anspruch 2 oder 3, wobei der Rahmen (3) und/oder das Bodenteil (2) eine Aussparung (6) aufweist, durch die ein mit der Schiebeeinrichtung verbundener Griff (7) zum Bewegen des Schiebers greift.

5. Tablar nach einem der Ansprüche 1 bis 4, wobei das Bodenteil mit dem Rahmen einstückig ausgebildet ist.

6. Tablar nach Anspruch 5, wobei der Schieber (4) der Schiebeeinrichtung nicht über das Bodenteil (2) nach oben hinausragt.

7. Tablar nach einem der Ansprüche 2 bis 6, wobei der Schieber ein Gelenk aufweist, so daß der Schieber auf das Bodenteil klappbar ist.

8. Tablar nach Anspruch 2, wobei der Rahmen am Bodenteil anbringbar, insbesondere aufsteckbar, ist; der mit einem Griff verbundene Schieber ein Gelenk aufweist, so daß der Schieber auf das Bodenteil klappbar ist; und der Schieber eine Feder aufweist, so daß der Schieber im ausgezogenen Zustand nicht aus der Führungsnut springt.

9. Tablar nach einem der vorhergehenden Ansprüche, wobei die Größe der Lagerfläche, auf der die Artikel lagerbar sind, gleich der Größe der Lagerfläche der im Kommisioniersystem verwendeten Paletten und/ oder Kleinladungsträger ist.

10. Tablar nach einem der vorhergehenden Ansprüche, wobei das Bodenteil eine Erhebung oder Vertiefung aufweist, wodurch das Tablar mit einem Lastaufnahmemittel eines Regalfahrzeugs oder Staplerfahrzeugs transportierbar ist.

11. Tablar nach Anspruch 1, aufweisend eine Spannfeder, die die Schiebeeinrichtung (4) in Richtung der Entnahmeposition gegenüber dem Tablar vorspannt.

12. Tablar nach Anspruch 11, aufweisend ein Halteelement zum Halten der vorgespannten Schiebeeinrichtung sowie eine Auslöseeinrichtung zum Lösen des Halteelements.

13. Tablar nach einem der Ansprüche 1 bis 4, wobei der Rahmen aus mehreren Elementen besteht und jedes Element über mindestens ein Gelenk mit dem Bodenteil verbunden ist, so daß die Elemente des Rahmens auf das Bodenteil klappbar sind.

## Claims

1. Layer-tray (1) for use in a picking system, which comprises:
a base part (2), on which articles to be picked can be stored,
a frame (3), which is attached to the base part, and
a sliding device (4) for displacing the articles to be picked in the direction of a removal position of the articles to be picked,
**characterised in that** the trough-shaped base part (2) is lowered with respect to the frame so that, when two layer-trays are stacked on top of one another, the base part of the top layer-tray is enclosed by the frame of the bottom layer-tray.

2. Layer-tray according to Claim 1, wherein the sliding device (4) comprises a slide which is guided in the base part (2) by means of at least one groove (5).

3. Layer-tray according to Claim 1, wherein the sliding device (4) comprises a slide which is guided in the frame (3) by means of at least one groove (5).

4. Layer-tray according to Claim 2 or 3, wherein the frame (3) and/or the base part (2) comprise(s) an opening (6) through which a handle (7) connected to the sliding device reaches for moving the slide.

5. Layer-tray according to any one of Claims 1 to 4, wherein the base part is formed in one piece with the frame.

6. Layer-tray according to Claim 5, wherein the slide (4) of the sliding device does not project upwards beyond the base part (2).

7. Layer-tray according to any one of Claims 2 to 6, wherein the slide comprises a joint, so that the slide can be folded onto the base part.

8. Layer-tray according to Claim 2, wherein the frame can be attached to the base part, in particular pushed onto the latter; the slide, connected to a handle, comprises a joint, so that the slide can be folded onto the base part; and the slide comprises a spring, so that the slide does not spring out of the guide groove in the extended state.

9. Layer-tray according to any one of the preceding Claims, wherein the size of the storage area on which the articles can be stored is equal to the size of the storage area of the pallets and/or small load carriers which are used in the picking system.

10. Layer-tray according to any one of the preceding Claims, wherein the base part comprises an elevation or a depression, whereby the layer-tray can be transported by a load-lifting means of a storage/retrieval vehicle or stacker vehicle.

11. Layer-tray according to Claim 1, comprising a tension spring which biases the sliding device (4) in the direction of the removal position with respect to the layer-tray.

12. Layer-tray according to Claim 11, comprising a retaining element for retaining the biased sliding device as well as a release device for releasing the retaining element.

13. Layer-tray according to any one of Claims 1 to 4, wherein the frame consists of a plurality of elements and each element is connected to the base part via at least one joint, so that the elements of the frame can be folded onto the base part.

## Revendications

1. Plateau de rayonnage (1) pour utilisation dans un système de préparation de commandes, présentant :
une partie fond (2), sur laquelle des articles de commandes à préparer sont susceptibles d'être stockés,
un cadre (3), monté sur la partie fond, et
un dispositif de coulissement (4), pour déplacer les articles de commandes à préparer en direction d'une position de prélèvement des articles de commandes à préparer,
**caractérisé en ce que** la partie fond (2) en forme d'auge est abaissée par rapport au cadre, de manière que, lorsqu'on empile deux plateaux de rayonnage l'un au-dessus de l'autre, la partie fond du plateau de rayonnage de dessus soit entouré par le cadre du plateau de rayonnage de dessous.

2. Plateau de rayonnage selon la revendication 1, dans lequel le dispositif de coulissement (4) présente un coulisseau, guidé dans la partie fond (2) au moyen d'au moins une rainure (5).

3. Plateau de rayonnage selon la revendication 1, dans lequel le dispositif de coulissement (4) présente un coulisseau, guidé dans le cadre (3) au moyen d'au moins une rainure (5).

4. Plateau de rayonnage selon la revendication 2 ou 3, dans lequel le cadre (3) et/ou la partie fond (2) présente(nt) un évidement (6), à travers lequel passe une poignée (7) reliée au dispositif de coulissement (4), pour déplacer le coulisseau.

5. Plateau de rayonnage selon l'une des revendications 1 à 4, dans lequel la partie fond est réalisée d'une seule pièce avec le cadre.

6. Plateau de rayonnage selon la revendication 5, dans lequel le coulisseau (4) du dispositif de coulissement ne fait pas saillie, vers le haut, de la partie fond (2).

7. Plateau de rayonnage selon l'une des revendications 2 à 6, dans lequel le coulisseau présente une articulation, de manière que le coulisseau puisse être rabattu sur la partie fond.

8. Plateau de rayonnage selon la revendication 2, dans lequel le cadre est susceptible d'être monté, en particulier est susceptible d'être enfiché, sur la partie fond ; le coulisseau, relié à une poignée, présente une articulation, de manière que le coulisseau puisse être rabattu sur la partie fond ; et le coulisseau présente une languette, de manière que, à l'état sorti, le coulisseau ne jaillisse pas élastiquement hors de la rainure de guidage.

9. Plateau de rayonnage selon l'une des revendications précédentes, dans lequel la grandeur de la surface de stockage, sur laquelle les articles sont susceptibles d'être stockés, est égale à la grandeur de la surface de stockage des palettes et/ou des supports de petites charges, utilisés dans le système de préparation de commandes.

10. Plateau de rayonnage selon l'une des revendications précédentes, dans lequel la partie fond présente un relief ou une cavité, faisant que le plateau de rayonnage peut être transporté avec un moyen support de charge d'un véhicule de stockage en rayonnage.

11. Plateau de rayonnage selon la revendication 1, présentant un ressort de serrage, précontraignant le dispositif de coulissement (4) en direction de la position de prélèvement par rapport au plateau de rayonnage.

12. Plateau de rayonnage selon la revendication 11, présentant un élément de maintien, pour maintenir le dispositif de coulissement précontraint, ainsi qu'un dispositif de déclenchement, pour libérer l'élément de maintien.

13. Plateau de rayonnage selon l'une des revendications 1 à 4, dans lequel le cadre est composé de plusieurs éléments et chaque élément est relié à la partie fond par l'intermédiaire d'au moins une articulation, de manière que les éléments du cadre puissent être rabattus sur la partie fond.
